# EUROPÄISCHE PATENTSCHRIFT

(11) **EP 2 891 575 B1**
(45) Veröffentlichungstag und Bekanntmachung des Hinweises auf die Patenterteilung: **15.05.2019**
(21) Anmeldenummer: 14150069.4
(22) Anmeldetag: 02.01.2014
(51) Int. Cl.: B60L 11/18, H02J 7/02

(54) **Übertragelement für ein System zur induktiven Energieübertragung**
Transfer element for a system for inductive energy transfer
Élément de transmission pour un système de transmission d'énergie inductif

(43) Veröffentlichungstag der Anmeldung: 08.07.2015
(73) Patentinhaber: Brusa Elektronik AG, 9466 Sennwald (CH)
(72) Erfinder: Böhler, Lukas, 7320 Sargans (CH)
(74) Vertreter: Rösler, Frank

(56) Entgegenhaltungen:
- WO-A1-2013/061611
- WO-A2-2010/000802
- WO-A2-2010/136927
- DE-U1-202012 101 733
- JP-A- 2010 272 991
- US-A1- 2013 249 682

## Beschreibung

Die Erfindung betrifft ein Übertragerelement für ein System mit wenigstens zwei Übertragerelementen zur induktiven Energieübertragung zwischen zumindest je zwei Übertragerelementen, nach dem Oberbegriff des Anspruchs 1.

In einem induktiven Ladesystem für Elektrofahrzeuge, als Anwendungsbeispiel für ein System zur induktiven Energieübertragung zwischen zwei Übertragerelementen, hier also dem meist im oder am Boden unter dem Fahrzeug befindlichen Primärteil und dem am Fahrzeug angebrachten Sekundärteil, treten zwischen der primärseitigen und der sekundärseitigen Spule starke Magnetfelder auf. Um Lebewesen vor Schäden zu schützen, muss dieser Zwischenraum überwacht werden. Weiters müssen auch metallische Gegenstände im Magnetfeld detektiert werden, die sich durch die starken Magnetfelder erhitzen und damit beispielsweise zu Bränden führen können.

So ist in der WO2013001811A1 eine Energieversorgungseinheit offenbart, bei der an einem Gehäuseteil ein separater kapazitiver Sensor angebracht ist, um einen sich auf dem Gehäuseteil und damit zwischen der im Gehäuse untergebrachten Primärspule und einer oberhalb des Gehäuses positionierten Sekundärspule befindlichen Gegenstand zu erkennen. Eine ähnliche Anordnung ist Gegenstand der WO2013061613A1.

Auch die WO2013061611A1 hat eine kontaktlose Leistungsübertragungsvorrichtung zum Gegenstand, bei welcher eine Energieversorgungseinrichtung berührungslos eine Leistungsempfangseinrichtung versorgt. Über eine durch einen Eingangswechselstrom versorgte Primärspule der Übertragungsvorrichtung wird ein magnetischer Fluss erzeugt der auch eine Sekundärspule der Empfangseinrichtung durchsetzt, wobei die Primärspule unter einer Abdeckung geschützt liegt. Eine Fremdkörper-Erfassungseinheit ist als separates System in der Nähe der Abdeckung positioniert und umfasst eine Fremdkörper-Bestimmungseinheit sowie eine Messanordnung, in welcher die Überschreitung eines Grenzwertes für eine Kapazität bestimmt wird, welche Überschreitung sich aufgrund der zusätzlichen Kapazität eines Fremdkörpers auf der Abdeckung der Primärspule ergibt.

Daneben wurden auch noch andere Lösungen vorgeschlagen, wie etwa die Verwendung von Wärmesensoren zur Ermittlung der Wärme von sich im Magnetfeld erhitzenden Fremdkörpern (z. B. in der WO2012004092A1) oder die Verwendung von optischen Sensoren zur Zwischenraumüberwachung zwischen Primär- und Sekundärteil von induktiven Ladesystemen.

Aufgabe der vorliegenden Erfindung ist es somit, eine Übertragerelement zur einfachen und dennoch sicheren Erkennung von Fremdkörpern oder lebenden Objekten mit geringem zusätzlichem Aufwand und kleiner Baugrösse zu schaffen.

Die Aufgabe wird durch die Merkmale des unabhängigen Anspruchs 1 gelöst. Vorteilhafte Weiterbildungen sind in den Figuren und in den abhängigen Patentansprüchen dargelegt.

Ausgehend von einer Konstruktion, bei der jedes Übertragerelement zumindest eine Spule und ein diese Spule aufnehmendes Gehäuse umfasst, ist das Übertragerelement gemäss der vorliegenden Erfindung dadurch gekennzeichnet, dass zumindest eine Kapazitäts-Messanordnung und zumindest eine Spannungs-Messanordnung für die Messung und Bestimmung der Kapazität sowie der Spannung zwischen zumindest der Primärspule des Übertragerelementes und dem diese Primärspule aufnehmenden Gehäuse oder zwischen zumindest einem dieser Bauteile und einem Bezugspotential eingerichtet ist.

Damit können zusätzliche, separate Sensoren entfallen, die am oder im Gehäuse an- bzw. untergebracht werden müssten und dabei erhöhten Platzbedarf und Herstellungsaufwand mit sich brächten. Die Auswerteschaltung für die Messanordnung für die genannten elektrischen Grössen im erfindungsgemässen Übertragerelement kann sehr klein ausfallen. Sie kann allenfalls auch baulich vom Übertragerelement getrennt angeordnet sein. Ein weiterer Vorteil ist die Ausnutzung ohnedies vorhandene Bauteile, wie etwa die Primärspule oder das Gehäuse der Übertragereinheit, als Elemente der Messschaltung.

Vorteilhafterweise ist zumindest eine vorzugsweise flächige, vorzugsweise im Wesentlichen ebene und jedenfalls elektrisch leitende Struktur im Gehäuse positioniert, und sind die Messanordnungen zwischen der Struktur und zumindest der Primäspule, dem diese Primärspule aufnehmenden Gehäuse oder einem Bezugspotential eingerichtet. Selbst eine derartige Struktur, die beispielsweise aus einer ebenen Platte oder mehreren nebeneinanderliegenden und elektrisch leitend miteinander verbundenen Platten bestehen kann, erfordert wesentlich weniger Platzbedarf als ein zusätzlicher kapazitiver Sensor, vereinfacht den Aufbau des Übertragerelementes und ergibt erst zusammen mit einem der übrigen Bauteile des Übertragerelementes sowie der Messschaltung eine Sensoranordnung für die Feststellung von metallischen Gegenständen oder lebenden Objekten auf oder oberhalb des Übertragerelementes.

Erfindungsgemäß ist vorgesehen, dass das Bezugspotential durch einen der Bauteile des Übertragerelementes, insbesondere die Primärspule und/oder das diese Primärspule aufnehmende Gehäuse, gebildet ist. Entsprechend einer Ausführungsform der Erfindung ist das Bezugspotential Erde.

Gemäss einer weiteren vorteilhaften Ausführungsform der Erfindung ist die zumindest eine Messanordnung zur Ermittlung von Veränderungen der Kapazität bzw. der Spannung zwischen einzelnen Bereichen der elektrisch leitenden Struktur und/oder zwischen einzelnen Bereichen der Struktur und einem Bezugspotential ausgelegt. Derartige Veränderungen sind insbesondere charakteristisch für lebende Objekte im Bereich des Übertragerelementes und gestatten eine sichere Identifikation dieser Objekte.

Vorteilhafterweise ist die elektromagnetische Kopplung zwischen der elektrisch leitenden Struktur und der energieübertragenden Spule kleiner 0.1, vor-zugsweise kleiner 0.01. Die elektromagnetische Kopplung als Masszahl der Gegeninduktivität zur Induktivität der energieübertragenden Primärspule soll natürlich so klein als möglich sein, um dadurch sicherzustellen, dass in der zumindest einen Messanordnung durch das energieübertragende Hauptmagnetfeld keine oder wenig Spannung induziert wird.

Eine erste Ausführungsform mit sehr geringer Induktivität ist durch eine elektrisch leitende Struktur gegeben, die zumindest einen Bereich mit vorzugsweise von einem gemeinsamen Zentrum ausgehenden, fingerförmig aufgefächerten Leiterbahnen umfasst.

Eine weitere erfindungsgemässe Ausführungsform sieht eine elektrisch leitende Struktur vor, welche zumindest zwei Gruppen von Bereichen mit zumindest teilweise spulenförmiger Struktur aufweist, wobei der Wicklungssinn innerhalb der Gruppen übereinstimmt, die beiden Gruppen aber gegensinnigen Wicklungssinn aufweisen. Die Gegeninduktivitäten von Bereichen mit einander entgegengesetztem Wicklungssinn heben einander auf. Damit ist gemittelt über zumindest die gesamte, für die Kapazitäts- und/oder Spannungsmessung genutzte leitende Struktur die elektromagnetische Koppelung zur ebenen Spule sehr gering. Sie kann durch entsprechende Wahl der Windungsanzahlen und Geometrien der spulenförmigen Bereiche kleiner als 0.1, vorzugsweise sogar kleiner als 0.01, gehalten werden.

Um mit diesen gering induktiven Strukturen Gegenstände im Bereich des Übertragerelementes gut feststellen zu können, sind mehrere spulenförmige Strukturen, zumindest mehrere spulenförmige Strukturen innerhalb eines Bereiches der leitenden Struktur, in Serie geschaltet.

Vorteilhafterweise ist dabei vorgesehen, dass zumindest ein Bereich oder eine Gruppe von Bereichen mit einer Messanordnung für die Spannung verbunden ist. Damit ist eine genauere Positionsermittlung des festzustellenden Gegenstandes möglich.

Bevorzugt sind die Windungen der spulenförmigen Bereiche auf Aufnahmestrukturen an der Innenseite des Gehäuses, beispielsweise auf innenliegenden Zapfen, gewickelt, wodurch eine sichere Lagepositionierung und Montage der spulenförmigen Bereiche gewährleistet ist.

Bevorzugt ist die Primärspule im Wesentlichen eben ausgeführt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erste Ausführungsform eines erfindungsgemässen Übertragerelementes in schematischer Darstellung mit Angabe der möglichen Kapazitätsmessungen,
- Fig. 2: eine andere Ausführungsform eines erfindungsgemässen Übertragerelementes mit einer zusätzlichen leitfähigen Struktur mit Angabe der möglichen Kapazitätsmessungen,
- Fig. 3: eine erste Ausführungsform einer leitfähigen Struktur mit geringer Induktivität mit Angabe der möglichen Kapazitätsmessungen,
- Fig. 4: eine weitere Ausführungsform einer leitfähigen Struktur mit über die gesamte Fläche der Struktur gemittelt niedrigen Induktivität sowie mit Angabe der möglichen Kapazitätsmessungen und einer Spannungsmessung,
- Fig. 5: eine andere Ausführungsform einer leitfähigen Struktur mit über die gesamte Fläche der Struktur gemittelt niedrigen Induktivität sowie mit Angabe der möglichen Kapazitäts- und Spannungsmessungen,
- Fig. 6: eine schematische Darstellung eines erfindungsgemässen Übertragerelementes als Teil eines Systems zum induktiven Laden von Elektrofahrzeugen,
- Fig. 7: eine detailliertere Darstellung einer kombinierten Messanordnung für die Kapazität und die Spannung,
- Fig. 8: eine schematische Darstellung für eine andere Ausführungsform einer leitenden Struktur und deren Befestigung an der Innenseite des Gehäuses des Übertragerelementes, und
- Fig. 9: eine weitere erfindungsgemässe Ausführungsform für eine leitende Struktur.

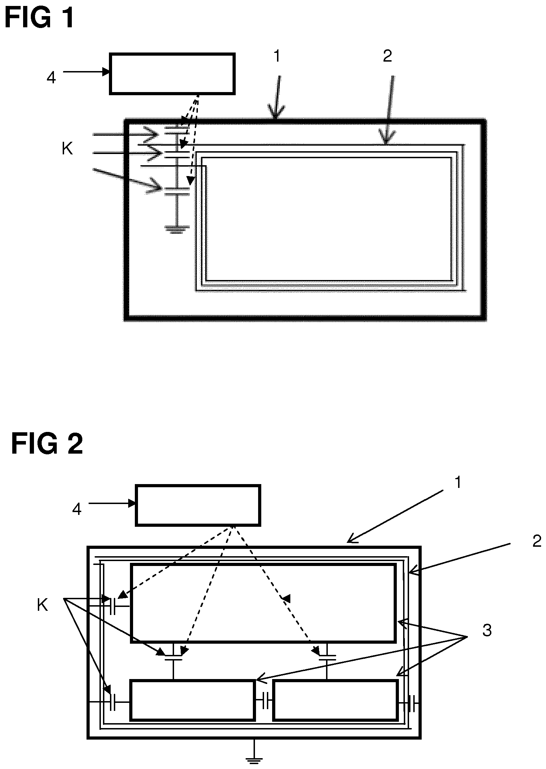

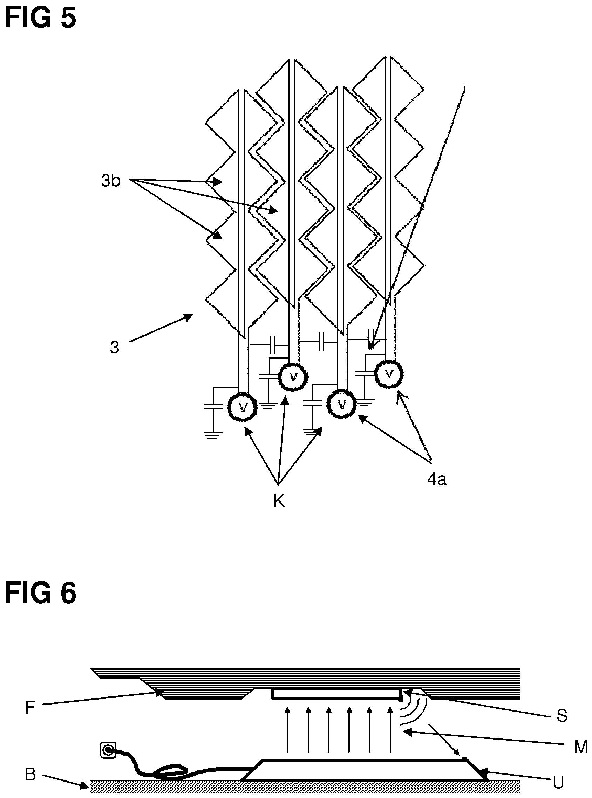

Fig. 1 zeigt in schematischer Darstellung ein Übertragerelement U für ein System zur induktiven Energieübertragung zwischen zwei Übertragerelementen, nämlich einem sendenden und einem empfangenden Übertragerelement. Das sendende Übertragerelement könnte beispielsweise, wie in Fig. 6 schematisch dargestellt, ein im Boden B unter einen Elektrofahrzeug F befindlicher Primärteil eines induktiven Ladesystems sein. Die Energie zur Ladung der Batterien des zumindest teilweise elektrisch betriebenen Fahrzeugs F wird dabei magnetisch (angedeutet durch die Pfeile M) vom ersten Übertragerelement U auf eine im Fahrzeug F, vorzugsweise dessen Unterboden, untergebrachte oder daran montierte Empfangseinheit, den Sekundärteil S bzw. das empfangende Übertragerelement, übertragen. Der Sekundärteil S speist die aufgenommene Energie dann in die Batterie, vorzugsweise die Traktionsbatterie des Fahrzeuges F, ein.

Im Gehäuse 1 des sendenden Übertragerelementes U ist zumindest eine Primärspule 2 untergebracht, mit der das im Wesentlichen normal auf die Ebene der Primärspule 2 orientierte Hauptmagnetfeld erzeugt wird, welches die Energie auf den Sekundärteil S überträgt, der in Ladeposition vorzugsweise oberhalb des Übertragerelementes U positioniert ist. Die Primärspule 2 kann planar, als Solenoid oder einer ähnlichen Form ausgebildet sein, ist vorzugsweise als im Wesentlichen ebene, grossflächige Spule mit mehreren Windungen aufgebaut, die vorteilhafterweise innerhalb eines Gehäuses 1 angeordnet ist. Dieses Gehäuse 1 kann auch die Resonanzkondensatoren und die Elektronik beherbergen.

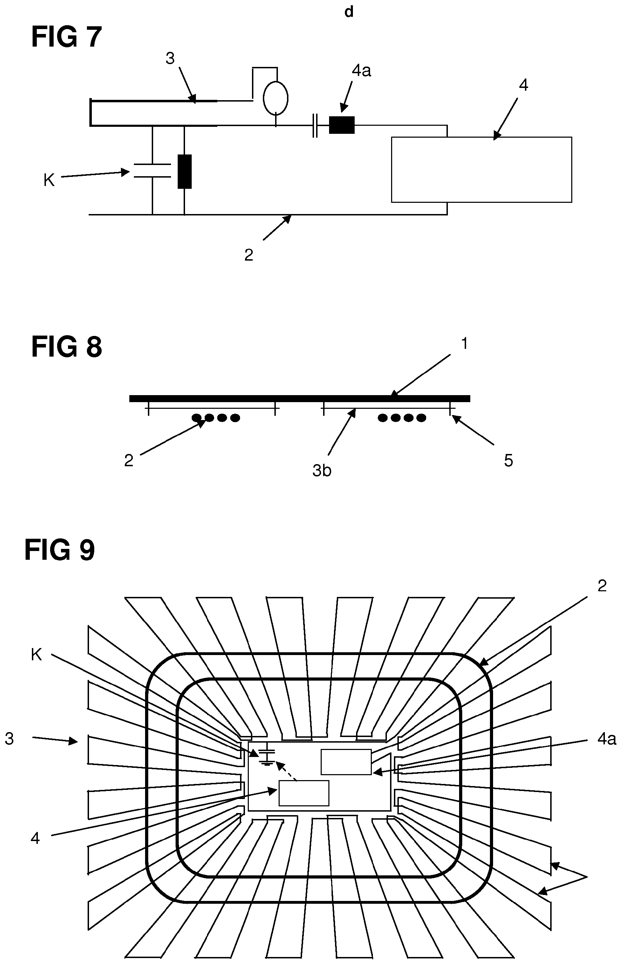

Wie durch die elektrischen Schaltzeichen K symbolisiert ist, existieren zwischen den Bauteilen des Übertragerelementes, insbesondere zwischen der energieübertragenden Primärspule 2 und dem Gehäuse 1 bzw. zwischen der Primärspule 2 und einem Bezugspotential, vorzugsweise der Erde, sowie allenfalls auch zwischen verschiedenen Bereichen der Primärspule 1 selbst, Kapazitäten K. Die Grössen dieser Kapazitäten K verändern sich bei Annäherung eines lebenden Objekts oder Fremdkörpers, so dass der aktuelle, über eine Messanordnung 4 ermittelbare Wert die Detektierung der Anwesenheit eines lebenden Objektes ermöglicht. Die Messleitungen von der Messanordnung 4 zu den jeweiligen Kapazitäten K sind durch strichlierte Pfeile symbolisiert (wobei diese Pfeile der Klarheit der Darstellung halber nicht in allen Abbildungen zu allen zu messenden Kapazitäten gezeigt sind, und nicht in allen Abbildungen die Messanordnung 4 dargestellt ist). Dazu wird entweder der aktuelle Wert der jeweiligen Kapazität mit einem Referenzwert verglichen oder es wird eine Kapazitätsveränderung detektiert und als Anzeichen für die Annäherung eines lebenden Objekts an das Übertragerelement gewertet. Die Auswertung kann beispielsweise realisiert sein, indem die zu messende Kapazität Teil eines Schwingkreises ist und die Resonanzfrequenz dieses Schwingkreises (siehe beispielsweise Fig. 7) gemessen wird.

Die Messanordnung 4 kann anstelle oder auch zusätzlich zur Messung zumindest einer der Kapazitäten K für die Messung der Spannung zwischen den oben genannten Bauteilen bzw. der Induktionsspannung ausgelegt und verbunden sein. Allenfalls können auch unterschiedliche Messanordnungen 4a, 4b für die Kapazitäten bzw. die Spannungen vorgesehen sein.

In Fig. 2 ist eine weitere Ausführungsform eines erfindungsgemässen Übertragerelementes in schematischer Darstellung gezeigt. Im Gehäuse 1 ist nun zusätzlich zur Primärspule 2 eine vorteilhafterweise parallel zur dieser Primärspule 2 orientierte, im Wesentlichen ebene, elektrisch leitende Struktur 3 untergebracht. Diese Struktur 3 kann aus einer einzelnen Platte oder mehreren, vorzugsweise ebenen und insbesondere plattenförmigen Teilen 3' bestehen, die miteinander oder in Gruppen untereinander elektrisch leitend verbunden sein können. Zwischen den Teilen 3' der Struktur 3 untereinander als auch zwischen Teilen der Struktur 3 und dem Gehäuse 1 oder der Primärspule 2 oder auch einem Bezugspotential existieren jeweils wieder Kapazitäten K. Diese Kapazitäten können über die Messanordnung 4 gemessen werden, die mit allen zu messenden Kapazitäten K über Messleitungen (strichliert dargestellt) verbunden sind. Die absoluten Werte der gemessenen Kapazitäten K werden dann in Bezug auf Referenzwerte als Anzeichen für die Anwesenheit bzw. Annäherung eines lebenden Objektes auf dem oder an das Übertragerelement herangezogen werden. Andererseits können auch relative Veränderungen ohne Bezug auf einen vorgegebenen Referenzwert als derartiges Anzeichen gewertet werden.

Die ebene Struktur 3, 3a, 3b kann vorteilhafterweise zusätzlich dazu verwendet werden, um Zerstörungen und/oder Defekte des Gehäuses 1 und/oder der Isolation zu detektieren. Es sind diverse Möglichkeiten gegeben, wie dies in der Praxis realisiert werden kann. Es könnte beispielsweise ein Strom in die Struktur 3 eingeprägt werden und solange dieser möglicherweise DC-Strom fliesst ist die Struktur in Ordnung. Weiter könnten bewusst Kopplungen eingebaut werden oder ein Messsignal in einer Zusatz-Schlaufe der Struktur 3 induziert werden.

Die Messanordnung 4 kann mit Erde als Bezugspotential verbunden sein, es können aber auch die Bauteile des Übertragerelementes U selbst, insbesondere die Primärspule 2 und/oder das Gehäuse 1, als Bezugspotential für die Kapazitätsmessung zu einem weiteren Bauteil des Übertragerelementes U herangezogen werden.

Die elektrisch leitende Struktur 3 soll möglichst wenig durch das Magnetfeld der Primärspule 2 beeinflusst werden, um die Detektierung von Gegenständen oder lebenden Objekten nicht zu behindern. Es soll aber auch die Energieübertragung von der Primärspule 2 auf den Sekundärteil möglichst wenig beeinträchtigt werden. Für beide Zwecke ist die elektromagnetische Kopplung der zusätzlichen, elektrisch leitenden Struktur 3 zur energieübertragenden Primärspule 2 gering zu halten. Vorzugsweise ist dabei ein Wert der elektromagnetischen Kopplung von 0.1, vorzugsweise von 0.01, zu unterschreiten. Als magnetische Kopplung wird die gegenseitige magnetische Einwirkung zweier oder mehrerer räumlich benachbarter Stromkreise aufgrund einer oder mehrerer Gegeninduktivitäten bezeichnet. Die Erweiterung auf "elektromagnetische Kopplung" wurde deshalb gewählt, da zwar die eigentliche Koppelung von Struktur 3 und Primärspule 2 magnetisch ist, der Effekt bis zum Signal an der Messanordnung 4 bzw. der Ausgangsspannung, d.h. der Gesamteffekt, aber elektromagnetisch ist.

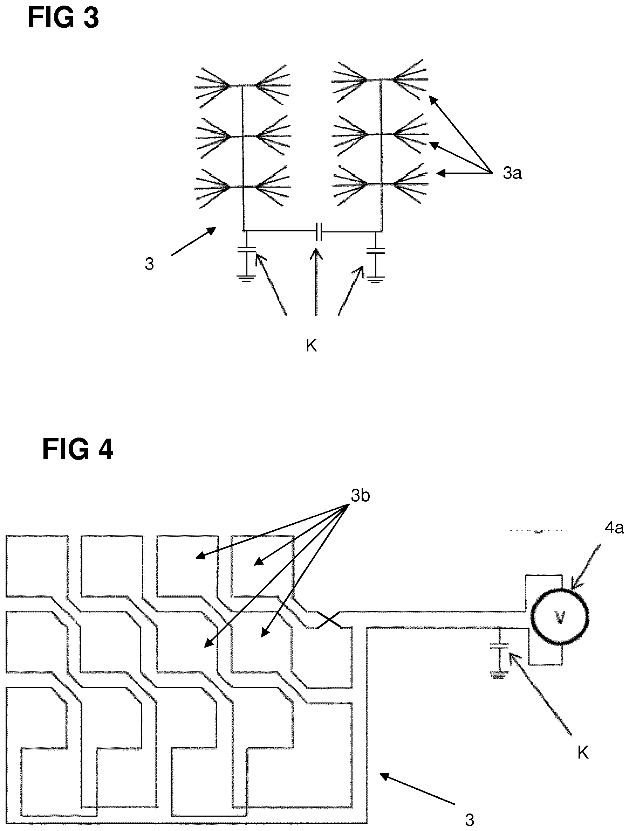

Um eine geringstmögliche elektromagnetische Kopplung durch geringe Induktivität der elektrisch leitenden Struktur 3 zu erreichen, kann diese, wie in Fig. 3 dargestellt, zumindest einen Bereich 3a mit fingerförmig aufgefächerten Leiterbahnen umfassen. Vorzugsweise sind die fingerförmig aufgefächerten Bereiche 3a verästelt bzw. in parallelen Reihen angeordnet und gehen von einem gemeinsamen, möglichst zentralen Ausgangspunkt aus. Jeder dieser Ausgangspunkte selbst kann an jeweils einer Abzweigung von einer länglichen, elektrisch leitenden Struktur angeordnet sein. Jeweils eine leitende Struktur ist mit zumindest einer Messanordnung 4, 4a gekoppelt.

Auch die in Fig. 4 dargestellte Ausführungsform der Struktur 3 weist insgesamt gesehen eine geringe Induktivität und damit eine sehr geringe elektromagnetische Kopplung mit der Primärspule 2 auf. Sie besteht aus einer Mehrzahl von Bereichen 3b mit zumindest teilweise spulenförmiger Struktur, wobei die Bereiche mit einander gegensinnigem Wicklungssinn in Bezug auf die Fläche und/oder die Anzahl einander zumindest im Wesentlichen die Waage halten. Damit kann gemittelt zumindest über begrenzte Mehrzahl von Teilabschnitten 3b der leitenden Struktur 3 die elektromagnetische Kopplung zwischen diese betrachtete Mehrzahl von Bereichen 3b der Struktur 3 die elektromagnetische Kopplung dieser Bereiche 3b zur Primärspule 2 sehr gering gehalten werden. Zumindest aber ergibt eine Mittelung über die Gesamtheit aller Bereiche 3b die gewünschte geringe Kopplung der Struktur 3 mit der Primärspule 2, wobei in jedem Fall wieder eine elektromagnetische Koppelung unter 0.1, vorzugsweise unter 0.01, angestrebt wird. Über eine Messanordnung 4a kann die Spannung über die Struktur 3 ermittelt und ebenfalls für die Detektierung von metallischen-Objekten im Bereich der Übertragereinheit herangezogen werden. Diese Spannungsdetektierung kann auch über einen oder mehrere Teilbereiche 3b der Struktur 3 eingerichtet sein, um gegebenenfalls eine bessere Positionsauflösung für die Detektierung des Gegenstandes bzw. des lebenden Objektes zu erzielen. Anstelle oder zusätzlich zu der Spannungsmessung ist es möglich den Strom in der Struktur 3 für die Detektierung von metallischen-Objekten zu messen.

Fig. 5 zeigt eine alternative Ausführungsform mit jeweils zwei parallelen, miteinander in Serie geschalteten, geradlinig hintereinander in einer Linie angeordneten Bereichen, zwischen welchen auch eine Messanordnung 4a für die Spannungsmessung geschaltet sein kann. Die in Serie geschalteten parallelen Reihen von spulenförmigen Strukturen haben einen zueinander gegensinnigen Wicklungssinn, so dass sich deren Induktivitäten ausgleichen und damit ebenfalls die elektromagnetische Kopplung zur Primärspule 2 minimiert werden kann.

Ein Beispiel einer kombinierten Messung der Kapazität K bzw. deren Veränderung zur Feststellung der Annäherung eines lebenden Objekts als auch der Spannung zur Feststellung des Vorhandenseins eines metallischen Fremdkörpers ist in Fig. 7 abgebildet. Dabei wird über eine Messanordnung 4 die Kapazität K zwischen einer leitenden Struktur 3 und zum Beispiel der Primärspule 2 als Bezugspotential bestimmt. Als Bezugspotential könnte auch das Gehäuse 1, eine Erdung od. dgl. herangezogen werden. Dann wird beispielsweise die der absolute Wert (in Bezug auf einen Referenzwert) oder die Veränderung der Resonanzfrequenz des die Kapazität K enthaltenden Schwingkreises über die Messanordnung 4 ermittelt. Zusätzlich ist aber auch eine Messung der Induktionsspannung über die leitfähige Struktur 3 durch eine zweite Messanordnung 4a vorgesehen.

In der Fig. 8 schliesslich ist eine weitere Ausführungsform für die elektrisch leitende Struktur 3, insbesondere in deren spulenförmiger Ausführung, und deren Anbringung im Inneren des Übertragerelementes U schematisch dargestellt. Überschneidend mit den Wicklungen der Primärspule 2 sind vorzugsweise dünnere Drähte der spulenförmigen Bereiche 3b der leitfähigen Struktur 3 auf Stiften oder Zapfen 5, Domen oder ähnlichen Oberflächenstrukturen an der Innenseite des Gehäuses 1 des Übertragerelementes aufgespannt. Die spulenförmigen Bereiche 3b (siehe dazu auch die Fig. 4 und 5) überschneiden sich dazu zumindest teilweise mit der Primärspule 2.

Schliesslich ist in Fig. 9 eine weitere Ausführungsform für die geometrische Gestaltung der leitenden Struktur 3 dargestellt. Die einzelnen spulenförmigen Bereiche 3b der Struktur 3 sind in Bezug auf die energieübertragende Primärspule 2 radial orientiert. Die einander benachbarten radialen Bereiche 3b weisen jeweils entgegengesetzten Wicklungssinn auf, so dass sich auch bei der Ausführungsform der Fig. 9 der Vorteil ergibt, dass sich die Induktivitäten der einzelnen radialen Bereiche 3b aufgrund des unterschiedlichen Wicklungssinns bei im Wesentlichen gleicher Fläche im Wesentlichen aufheben. Folglich kann auch durch die Struktur 3 der Fig. 9 die elektromagnetische Kopplung zwischen der leitenden Struktur 3 und der energieübertragenden Spule 2 minimal gehalten werden kann, vorzugsweise kleiner als 0.1, insbesondere kleiner als 0.01.

### Bezugszeichenliste

- 1: Gehäuse der Übertragereinheit
- 2: Primärspule
- 3: Elektrisch leitende Struktur
- 3': Teile der elektrisch leitenden Struktur
- 3a: Fingerförmiger Bereich der Struktur
- 3b: Spulenförmiger Bereich der Struktur
- 4: Messanordnung (Kapazität)
- 4a: Messanordnung (Spannung)
- 5: Zapfen zum Aufspannen der spulenförmigen Bereiche der Struktur
- U: Übertragerelement
- B: Boden
- F: Fahrzeug
- S: Sekundärteil
- M: Magnetfeld

## Patentansprüche

1. Übertragerelement (U) für ein System mit wenigstens zwei Übertragerelementen zur induktiven Energieübertragung zwischen zumindest je zwei Übertragerelementen, jedes Übertragerelement umfassend zumindest eine Spule (2) und ein diese Spule aufnehmendes Gehäuse (1), **dadurch gekennzeichnet, dass** zumindest eine Kapazitäts-Messanordnung (4) und zumindest eine Spannungs-Messanordnung (4a) für die Messung und Bestimmung der Kapazität sowie der Spannung zwischen zumindest der Primärspule (2) des Übertragerelementes (U) und dem diese Primärspule (2) aufnehmenden Gehäuse (1) oder zwischen zumindest einem dieser Bauteile (1, 2) und einem Bezugspotential eingerichtet ist, wobei das Bezugspotential durch das diese Primärspule (2) aufnehmenden Gehäuse (1), gebildet ist.

2. Übertragerelement nach Anspruch 1, **dadurch gekennzeichnet, dass** zumindest eine vorzugsweise flächige, vorzugsweise im Wesentlichen ebene und jedenfalls elektrisch leitende Struktur (3) im Gehäuse (1) positioniert ist, und dass die Messanordnungen (4, 4a) zwischen der Struktur (3) und zumindest der Primärspule (2), dem diese Primärspule (2) aufnehmenden Gehäuse (1) oder einem Bezugspotential eingerichtet ist.

3. Übertragerelement nach Anspruch 1 oder 2, **dadurch gekennzeichnet, dass** das Bezugspotential Erde ist.

4. Übertragerelement nach einem der Ansprüche 2 bis 3, **dadurch gekennzeichnet, dass** die zumindest eine Messanordnung (4, 4a) zur Ermittlung von Veränderungen der Kapazität bzw. der Spannung zwischen einzelnen Bereichen (3a, 3b) der elektrisch leitenden Struktur (3) und/oder zwischen einzelnen Bereichen (3a, 3b) der Struktur (3) und einem Bezugspotential ausgelegt ist.

5. Übertragerelement nach einem der Ansprüche 2 bis 4, **dadurch gekennzeichnet, dass** die elektromagnetische Kopplung zwischen der elektrisch leitenden Struktur (3) und der energieübertragenden Spule (2) kleiner 0.1, vorzugsweise kleiner 0.01, ist.

6. Übertragerelement nach einem der Ansprüche 2 bis 5, **dadurch gekennzeichnet, dass** die elektrisch leitende Struktur (3) zumindest einen Bereich (3a) mit vorzugsweise von einem gemeinsamen Zentrum ausgehenden, fingerförmig aufgefächerten Leiterbahnen umfasst.

7. Übertragerelement nach einem der Ansprüche 2 bis 5, **dadurch gekennzeichnet, dass** die elektrisch leitende Struktur (3) zumindest zwei Gruppen von Bereichen (3b) mit zumindest teilweise spulenförmiger Struktur aufweist, wobei der Wicklungssinn innerhalb der Gruppen übereinstimmt, die beiden Gruppen aber gegensinnigen Wicklungssinn aufweisen.

8. Übertragerelement nach Anspruch 7, **dadurch gekennzeichnet, dass** mehrere spulenförmige Strukturen, zumindest mehrere spulenförmige Strukturen innerhalb eines Bereiches (3 b) der leitenden Struktur (3), in Serie geschaltet sind.

9. Übertragerelement nach Anspruch 7 oder 8, **dadurch gekennzeichnet, dass** zumindest ein Bereich (3b) oder eine Gruppe von Bereichen (3b) mit einer Messanordnung (4b) für die Spannung verbunden ist.

10. Übertragerelement nach einem der Ansprüche 7 bis 9, **dadurch gekennzeichnet, dass** die Windungen der spulenförmigen Bereiche (3b) auf Aufnahmestrukturen an der Innenseite des Gehäuses (1), beispielsweise auf innenliegenden Zapfen (5), gewickelt sind.

11. Übertragerelement nach einem der Ansprüche 1 bis 10, **dadurch gekennzeichnet, dass** die Primärspule (2) im Wesentlichen eben ausgeführt ist.

## Claims

1. Transfer element (U) for a system with at least two transfer elements for inductive energy transfer between at least two transfer elements in each case, each transfer element comprising at least one coil (2) and a housing (1) accommodating this coil, **characterised in that** at least one capacitance measuring device (4) and at least one voltage measuring device (4a) is set up for measuring and determining the capacitance as well as the voltage between at least primary coil (2) of the transfer element (U) and the housing (1) accommodating this primary coil (2) or between at least one of these components (1, 2) and a reference potential, wherein the reference potential is formed by the housing (1) accommodating this primary coil (2).

2. Transfer element according to claim 1 **characterised in that** a preferably planar, preferably essentially flat and in all events electrically conducting structure (3) is positioned in the housing (1) and **in that** the measuring devices (4, 4a) are arranged between the structure (3) and at least the primary coil (2), the housing (1) or a reference potential accommodating this primary coil (2).

3. Transfer element according to claim 1 or 2 **characterised in that** the reference potential is earth.

4. Transfer element according to any one of claims 2 to 3 **characterised in that** the at least one measuring device (4, 4a) is configured to determine changes in the capacitance and/or the voltage between individual areas (3a, 3b) of the electrically conducting structure (3) and/or between individual areas (3a, 3b) of the structure (3) and a reference potential.

5. Transfer element according to any one of claims 2 to 4 **characterised in that** the electromagnetic coupling between the electrically conducting structure (3) and the energy transferring coil (2) is less than 0.1, preferably less than 0.01.

6. Transfer element according to any one of claims 2 to 5 **characterised in that** the electrically conducting structure (3) comprises at least one area (3a) with conducting paths fanning out in a finger-like manner preferably from a common centre.

7. Transfer element according to any one of claims 2 to 5 **characterised in that** the electrically conducting structure (3) comprises at least two groups of areas (3b) with an at least partially coil-like structure, wherein the winding direction within the groups corresponds, but both groups have opposite directions.

8. Transfer element according to claim 7 **characterised in that** several coil-like structures, at least several coil-like structures within an area (3b) of the conducting structure (3) are connected in series.

9. Transfer element according to claim 7 or 8 **characterised in that** at least one area (3b) or one group of areas (3b) is connected with a measuring device (4b) for the voltage.

10. Transfer element according to any one of claims 7 to 9 **characterised in that** the windings of the coil-like areas (3b) are wound on holder structures on the inside of the housing (1), for example on internal pegs (5).

11. Transfer element according to any one of claims 1 to 10 **characterised in that** the primary coil (2) is essentially designed in a planar manner.

## Revendications

1. Elément de transmission (U) pour un système avec au moins deux éléments de transmission d'énergie inductive entre au moins chaque paire d'éléments de transmission, chaque élément de transmission comprenant au moins une bobine (2) et un boîtier (1) logeant cette bobine, **caractérisé en ce qu'**au moins un système de mesure de capacité (4) et au moins un système de mesure de tension (4a) pour la mesure et la détermination de la capacité ainsi que de la tension sont agencés entre au moins la bobine primaire (2) de l'élément de transmission (U) et le boîtier (1) logeant cette bobine primaire (2) ou entre au moins un de ces composants (1, 2) et un potentiel de référence, le potentiel de référence étant formé par le boîtier (1) logeant cette bobine primaire (2).

2. Elément de transmission selon la revendication 1, **caractérisé en ce qu'**au moins une structure (3) de préférence mince, de préférence pour l'essentiel plane et éventuellement électro-conductrice est positionnée dans un boîtier (1) et **en ce que** les systèmes de mesure (4, 4a) sont agencés entre la structure (3) et au moins la bobine primaire (2), le boîtier (1) logeant cette bobine primaire (2) ou un potentiel de référence.

3. Elément de transmission selon la revendication 1 ou 2, **caractérisé en ce que** le potentiel de référence est la terre.

4. Elément de transmission selon l'une quelconque des revendications 2 à 3, **caractérisé en ce qu'**au moins un système de mesure (4, 4a) est conçu pour déterminer des variations de capacité ou de tension entre les zones individuelles (3a, 3b) de la structure électro-conductrice (3) et/ou entre les zones individuelles (3a, 3b) de la structure (3) et un potentiel de référence.

5. Elément de transmission selon l'une quelconque des revendications 2 à 4, **caractérisé en ce que** le couplage électromagnétique entre la structure électroconductrice (3) et la bobine transmettant l'énergie (2) est inférieur à 0,1, de préférence inférieur à 0,01.

6. Elément de transmission selon l'une quelconque des revendications 2 à 5, **caractérisé en ce que** la structure électroconductrice (3) comprend au moins une zone (3a) avec de préférence des réseaux de circuits imprimés disposés en éventail en forme de doigt partant d'un centre commun.

7. Elément de transmission selon l'une quelconque des revendications 2 à 5, **caractérisé en ce que** la structure électroconductrice (3) comporte au moins deux groupes de zones (3b) avec une structure au moins en partie en forme de bobine, le sens d'enroulement coïncidant à l'intérieur des groupes, mais les deux groupes comportant un sens d'enroulement opposé.

8. Elément selon la revendication 7, **caractérisé en ce que** plusieurs structures en forme de bobine, au moins plusieurs structures en forme de bobine à l'intérieur d'une zone (3b) de la structure conductrice (3), sont connectées en série.

9. Elément de transmission selon la revendication 7 ou 8, **caractérisé en ce qu'**au moins une zone (3b) ou un groupe de zones (3b) est relié à un système de mesure (4b) pour la tension.

10. Elément de transmission selon l'une quelconque des revendications 7 à 9, **caractérisé en ce que** les spires des zones en forme de bobine (3b) sont enroulées sur des structures de réception sur le côté intérieur du boîtier (1), par exemple sur des pivots (5) situés à l'intérieur.

11. Elément de transmission selon l'une quelconque des revendications 1 à 10, **caractérisé en ce que** la bobine primaire (2) est exécutée pour l'essentiel plane.
